# EUROPEAN PATENT APPLICATION

(11) **EP 3 659 412 A1**
(43) Date of publication of application: **03.06.2020**
(21) Application number: 19210922.1
(22) Date of filing: 22.11.2019
(51) Int. Cl.: A01B 15/06, A01B 23/02, A01B 35/22, A01B 33/02, A01B 33/04, A01B 33/08, A01B 35/24

(54) **A CULTIVATOR AND A METHOD FOR CONNECTING A GROUND TOOL TO A TOOL CARRYING STRUCTURE**

(30) Priority: 27.11.2018 DK PA201870782
(71) Applicant: Thyregod A/S, 7323 Give (DK)
(72) Inventor: JENSEN, Claus Harrild, 7330 Brande (DK); POULSEN, Rune, 5250 Odense SV (DK)
(74) Representative: Patentgruppen A/S

(57) **Abstract**

Disclosed is a cultivator (1) comprising a tool carrying structure (2) arranged to suspend one or more ground tools (3) each comprising a tyne (4) and a ground engaging blade (5). The tyne (4) is arranged to extend between the ground engaging blade (5) and the tool carrying structure (2). The ground engaging blade (5) is arranged to engage the ground (6) during normal use of the cultivator (1). Furthermore, one or more ground tools (3) are connected to the tool carrying structure (2) by means of a suspension arrangement (7), wherein said suspension arrangement (7) comprises a wedge (8) arranged in a guide (9). One of the wedge (8) and the guide (9) is rigidly connected to the tool carrying structure (2) and the other one of the wedge (8) and the guide (9) is rigidly connected to the one or more ground tools (3). The wedge (8) is arranged so that it is forced into engagement with a guide (9) when the ground tools (3) are pulled through the ground (6) during normal use of the cultivator (1).

## Description

### Field of the invention

The invention relates to a cultivator comprising a tool carrying structure arranged to suspend one or more ground tools each comprising a tyne and a ground engaging blade. The invention further relates to a method for connecting a ground tool to a tool carrying structure of a cultivator.

### Background of the invention

Cultivators are used in agriculture or botany for loosening and agitating soil by dragging a blade-like object through the soil by using a tractor. Cultivators may be used prior to planting the crops (e.g. to aerate and prepare the soil) and after/during the crop growth. For example, an inter-row cultivator is a tool which is used for weed control. The weed control is achieved by dragging e.g. a blade-like object through the soil between the rows of crops whereby the top layer of the soil is agitated and stirred such that the roots of the weed are uprooted or cut whereby the weed is killed. It is important to adjust the cultivating width depending on the available space between the rows of crops such that the crops are not accidently cut by the blade or buried by the agitated soil. Also, the cultivating width and/or the blade must be adapted according to different types of crops and crops at different growth stage. For example, a particular blade may be suitable for weed control of crops in the early growth stage, which should not be accidently buried by the stirred soil. The blades are usually mounted on a tyne and may for each inter-row arrangement be arranged in an arrow-like arrangement on a carrier, which enables adjustment of the cultivating width between the rows e.g. the width may be reduced by dismounting the outer-most tynes and blades from the carrier.

However, the process of removing a blade or tyne involves cumbersome and time-consuming work as they are positioned close to the ground whereby an operator is forced in a difficult working position such that the back of the operator is heavily stressed. Furthermore, the bolts or screws are very often corroded whereby the process is even more strenuous. Therefore, replacement or removal of the blades or tynes for adjusting the cultivating width may often be neglected whereby the efficiency of the cultivator is reduced.

From DK/EP 1259105T4 and DK 2003 01200 L it is known to mount the blades on a tyne by providing the blade with a wedge-like part such that assembly and disassembly of the blades is eased. However, this still involves time-consuming work and does not provide for an efficient process of adjusting the cultivating width.

It is therefore an object of the present invention to provide for an efficient cultivator which is easy to adjust and maintain and thus provide a method for connecting a ground tool to a cultivator in a simple and efficient manner.

### The invention

The invention provides for a cultivator comprising a tool carrying structure arranged to suspend one or more ground tools each comprising a tyne and a ground engaging blade. The tyne is arranged to extend between the ground engaging blade and the tool carrying structure. The ground engaging blade is arranged to engage the ground during normal use of the cultivator. Furthermore, one or more ground tools are connected to the tool carrying structure by means of a suspension arrangement, wherein the suspension arrangement comprises a wedge arranged in a guide. One of the wedge and the guide is rigidly connected to the tool carrying structure and the other one of the wedge and the guide is rigidly connected to the one or more ground tools. The wedge is arranged so that it is forced into engagement with a guide when the ground tools are pulled through the ground during normal use of the cultivator.

Connecting the ground tools to the tool carrying framework by arranging a wedge into engagement with e.g. a slot is advantageous in that the ground tools may be disconnected from the tool carrying framework in a fast and efficient manner - e.g. by the help of a hammer. Furthermore, the one or more soil tools and tool carrying structure are rigidly and firmly engaged by the frictional forces between the wedge and the guide, and given the orientation of the suspension arrangement the connected between the two part are made even firmer when the cultivator is used.

Even further, connecting both the tyne and the ground engaging blade to the tool carrying structure by means of the suspension arrangement enables that the wedge and guide can be located at a position such that the operator may access the suspension arrangement from the top side of the cultivator - i.e. in a more comfortable working position - and thereby easily release the ground tool from the tool carrying structure. The present suspension arrangement also enables that the ground tool can also easily be removed from the tool carrying structure in its entirety such that the blade replacement may be performed at another suitable location.

In this context, the term "tool carrying structure" should be understood as a beam, lattice construction, frame or other kind of stiff structure which may carry the one or more ground tools and e.g. additional equipment.

In this context, the term "ground tools" should be understood as a tyne, strut, shank, pin, hook or any other structure which connects the tool carrying structure and a ground engaging part, at least combined with a blade, tooth, hoe, shovel, plough or other structure which engages the underlying ground during use of the cultivator.

In this context, the term "ground engaging blade" should be understood as a tooth, hoe, shovel, plough or any other kind of object which may be used for agitating the ground.

In this context, the term "wedge" should be understood as a cone, pyramid-shaped object, nail, mandrel or other kind of objects which narrows down or tapers such that a self-locking is achieved due to frictional forces upon engagement with a mating surface when the wedge is forced into an orifice that is smaller than the greatest width of the wedge.

In this context, the term "guide" should be understood as a slot, groove, a passage, a channel, a hole, a gap or any other kind of guide of which surfaces engage the surfaces of the wedge as the wedge is forced into the guide.

In this context, the term "rigidly connected" should be understood as a joining method such as welding, bolting, clicking, screwing or other joining method such that the joined parts are fixed together.

In an aspect of the invention, the suspension arrangement further comprises a vertical retainer arranged to retain the vertical position of the ground tools at least when the wedge is engaging the guide.

It is advantageous to use a vertical support in that the ground tool is prevented from being lifted out of position, e.g. if the cultivator hits a rock in the ground or when the cultivator is pushed backwards (e.g. if the pulling tractor reverses for adjusting position) which may lift the cultivator upwards.

In should be noted that throughout this document any reference to orientation - i.e. up, down, side, top, vertical, horizontal etc. - is made in relation to the cultivator when it is in normal use as a cultivator - i.e. when it is engaging the ground and traveling across a field.

In an aspect of the invention, the vertical retainer comprises a first retainer part rigidly connected to the ground tool and a second retainer part rigidly connected to the tool carrying structure and wherein the first retainer part and the second retainer part are arranged to be mutually locking in a vertical direction at least when the wedge is engaging the guide.

It is advantageous to provide the vertical restrain with a first part and a second part in that the vertical interlocking is achieved by sliding the first part and the second part into engagement with each other simultaneously as the wedge engages the guide. This is advantageous in that the operator may not mistakenly forget to lock the vertical retainer as this is performed automatically as the cultivator is pulled on.

In this context, the term "vertical retainer" should be understood as a pin, brace, hole, hook which engages an eye, a spring-loaded mechanism, a spring pin or any other kind of retainer which prevents relative vertical movement between the ground tool and the tool carrying structure.

In an aspect of the invention, the engaging wedge surfaces of the wedge and the guide are arranged substantially vertical.

Arranging the mating surfaces substantially vertical is advantageous in that the contacting surfaces provide for natural discharging of dirt, soil, crop debris or other unwanted material in that the vertical faces do not support and retain any unwanted material from falling out. Furthermore, this design enables that the ground tool may then be mounted upside-down on the tool carrying structure whereby adjustment the width of the cultivator is eased and/or replacement of the blade may be performed in a more comfortable working position, i.e. the operator may reach and replace the blade from a standing position.

In an aspect of the invention, the general shape of the wedge substantially corresponds to the general shape of the guide.

It is advantageous to arrange the form of the wedge such that it corresponds to the form of the guide in that the mating surfaces will fit each other such that a more strong and durable fit is formed and stronger frictional force is generated as the wedge is forced into the guide whereby a firm interlocking between the wedge and the guide is obtained.

In an aspect of the invention, the guide is formed bottomless.

It is advantageous to form the slot without a floor part in that accumulation of dirt, soil, crop debris or other unwanted material in the guide is prevented, said unwanted material may otherwise block the wedge from being forced into the guide.

In an aspect of the invention, two or more ground tools are mounted side by side on the same suspension bar, wherein the wedge or the guide is provided on the suspension bar to be rigidly connected to the tool carrying structure.

It is advantageous to provide two or more tynes with blades on the same suspension girder in that more ground tools hereby may be manipulated simultaneously.

Furthermore, the invention also provides for a method for connecting a ground tool to a tool carrying structure of a cultivator. The ground tools comprise a tyne and a ground engaging blade, wherein the tyne is arranged to extend between the ground engaging blade and the tool carrying structure. The method comprises the steps of
- placing the ground tool so that a wedge rigidly connected to one of the ground tool and the tool carrying structure is arranged in front of a guide rigidly connected to one of the ground tool or the tool carrying structure, and
- forcing the wedge and the guide together to wedge the guide and the wedge together to fix the ground tool and the tool carrying structure against mutual displacement at least in a substantially horizontal plane.

Using the invention for connecting a ground tool to a tool carrying structure of a cultivator is advantageous in that a simple connection is achieved which renders bolting, welding or other methods for joining the parts unnecessary. Therefore, manufacturing and assembling the parts of the cultivator is cheaper and easier.

In an aspect of the invention, a first retainer part is arranged being rigidly connected to the ground tool in a pre-engaging position in relation to a second retainer part being rigidly connected to the tool carrying structure when placing the wedge and the guide in front of each other. The first retainer part and the second retainer part are engaged when the wedge and the guide is forced together to fix the ground tool and the tool carrying structure against mutual displacement at least in a substantially vertical plane.

Engaging a first retainer part and a second retainer part as the wedge and guide are forced together is advantageous in that the vertical displacement is fixed simultaneously with the wedge and the guide engaging each other.

The invention also provides for a method according to any of the previously discussed methods, wherein the method is performed by means of a cultivator according to the previously discussed cultivators.

In an embodiment of the invention, the suspension arrangement further comprises a safety lock.

It is advantageous to provide the suspension arrangement with a safety lock in that the wedge and the guide remain engaged at all time such that the ground tools are prevented from being released from the tool carrying structure. Furthermore, it is advantageous to provide the suspension arrangement with a safety lock in that the safety lock must manually be released before the ground tool may be released from the tool carrying structure, whereby accidental release is prevented.

### Figures

The invention will be described in the following with reference to the figures in which
- fig. 1: illustrates a cultivator as seen in perspective,
- fig. 2: illustrates a cultivator as seen from the side,
- fig. 3: illustrates an embodiment of the cultivator comprising a third retainer and a safety lock as seen in perspective,
- fig. 4: illustrates an embodiment of the cultivator comprising a third retainer and a safety lock as seen from above,
- fig. 5: illustrates an embodiment of the cultivator comprising a third retainer and a safety lock as seen from below,
- fig. 6: illustrates the suspension arrangement as seen in perspective,
- fig. 7: illustrates a safety lock as seen in perspective, and

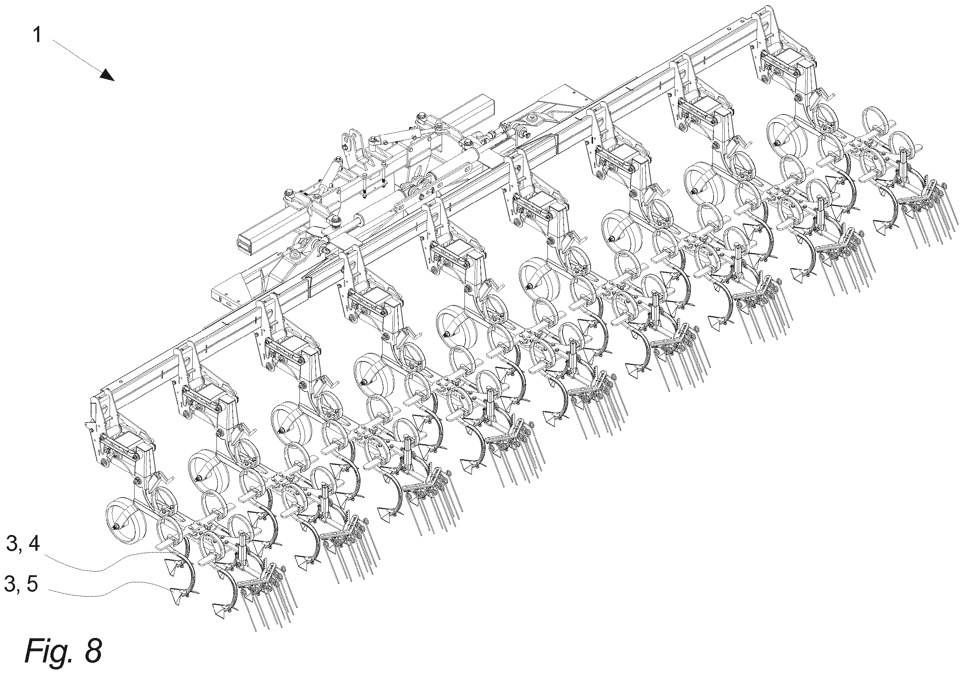

- fig. 8: illustrates a large inter-row cultivator as seen in perspective.

### Detailed description

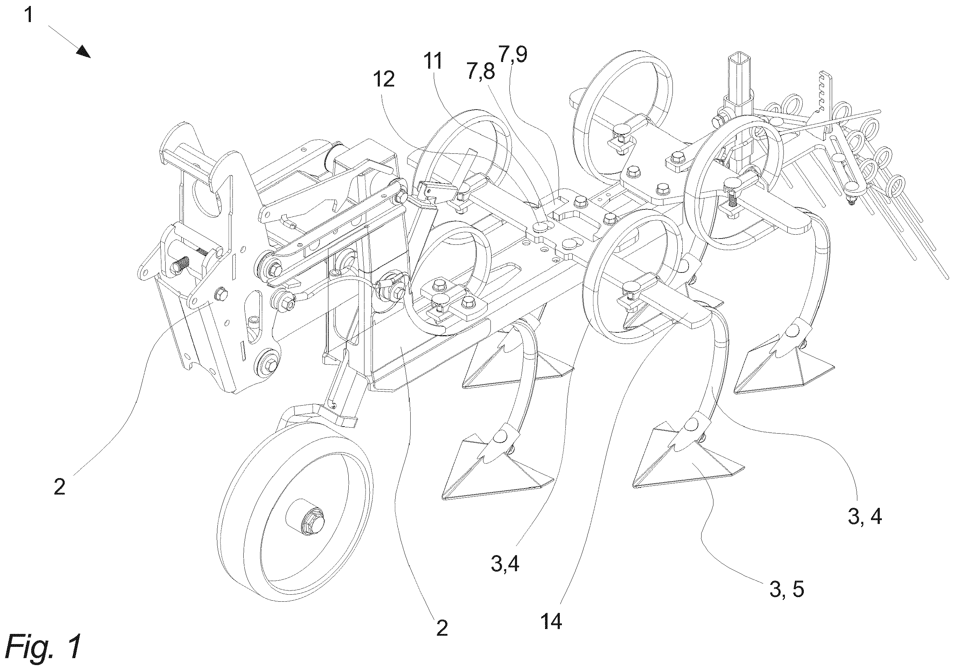

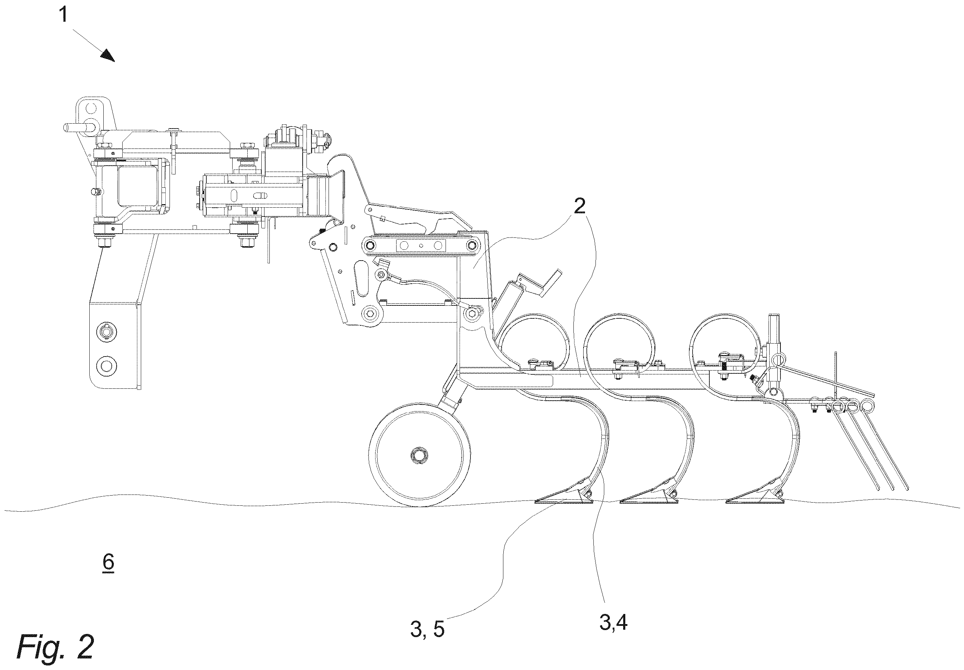

Fig. 1-2 illustrates a cultivator as seen in perspective and from the side, respectively.

Before starting the field cultivation, the cultivator is usually adjusted to the type of field to be cultivated. For example, if weed control is necessary, the cultivator may be arranged as an inter-row cultivator. Thus, the ground tools 3 may be mounted to the tool carrying structure 2 either via a suspension bar 14 or directly on the tool carrying structure 2 via the suspension arrangement 7, which comprises the wedge 8 and the guide 9. The ground tools 3 are placed on the tool carrying structure in a pre-engagement position where after the operator may proceed to the tractor for towing the cultivator along the field. As the tractor pulls on the cultivator, the wedge 8 is forced further into the guide 9 whereby the ground tool 3 is wedged securely during the entire cultivation process. Simultaneously, the vertical retainer parts 11, 12 engage each other such that the ground tools 3 are also fixated in the vertical direction.

In this embodiment, the cultivator is arranged as an inter-row cultivator. However, in another embodiment the cultivator could be arranged as a harrow, plough, spike-harrow or other agricultural equipment used for mechanically manipulating the soil.

In this embodiment, a traditional four wheeled tractor (not shown) is used for towing the cultivator. However, in another embodiment, the cultivator could be towed or pulled by a caterpillar track machinery, truck or it could be self-propelled. Furthermore, in this embodiment, the tractor may haul the cultivator via a three-point linkage, a drawbar or it could be mounted directly on the tractor.

Furthermore, in this embodiment, the first retainer part 11 is a slot and the second retainer part 12 is a pin with a wide head, which engage each other such that the vertical displacement of the ground tool 3 is fixated because the head of the pin is wider that the slot when the pin is located at the narrow part of the slot. However, in another embodiment, the vertical retainer could comprise a hook which engages an eye, a spring-loaded mechanism, a spring pin or any other type of retainer suitable for locking the vertical displacement of the ground tool 3 in relation to the tool support structure 2.

In this embodiment, second retainer part 12 is welded to the tool carrying structure 2. However, in another embodiment, the second retainer part 12 may comprise outer threads which may engage corresponding inner threads on the tool carrying structure for rigidly fixating the second retainer part 12 to the tool carrying structure 2.

As the ground engaging blade 5 is dragged through the ground 6, it will eventually be worn down such that it must be replaced for effective cultivation. Thus, the ground tool 3 may be released from the tool carrying structure 2 by releasing the wedge 8 from the guide 9 possibly by using a hammer. The ground tool 3 may then be mounted upside-down on the tool carrying structure 2 such that the ground engaging blades 5 point upwards and away from the ground 6. Thereby, the operator may replace, clean or sharpen the blade 5 from a standing position.

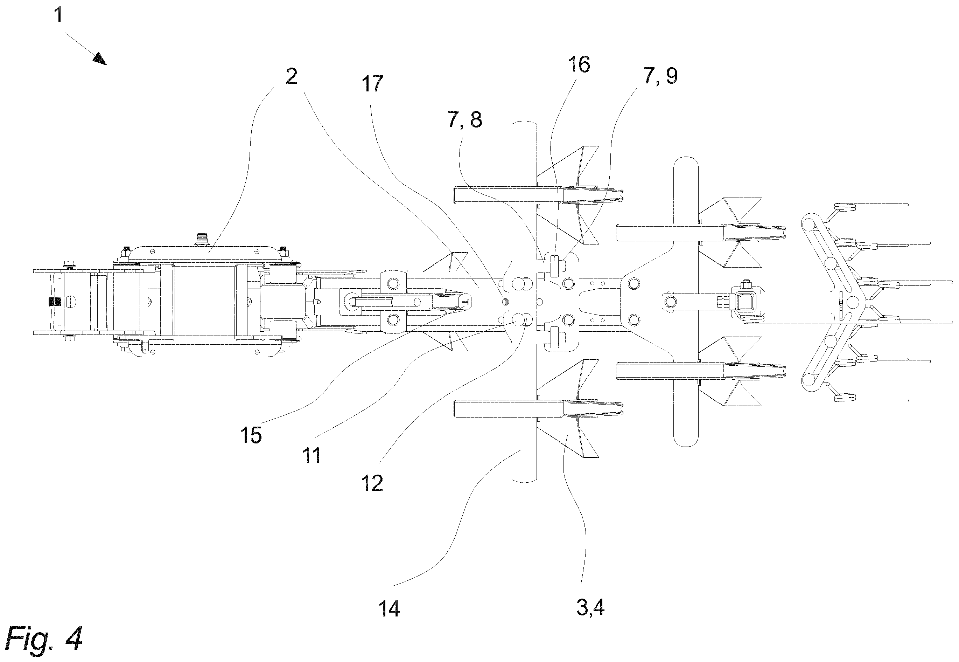

In this embodiment, two of the ground tools 3 are arranged on a suspension bar 14 which is connected to the carrying structure 2 via the suspension arrangement 7 such that the cultivating width is increased. However, in another embodiment, three, four, six, twelve or even more ground tools 3 may be arranged on the same suspension bar 14. Furthermore, in another embodiment, the ground tools 3 are arranged directly on the tool carrying structure 2 in one-by-one continuation of each other. Also, some of the ground tools 3 could be mounted on the suspension bar 14 while others are mounted directly on the tool support structure such that e.g. a diamond-like arrangement of the ground tools 3 (as seen for example in fig. 4) is achieved. In yet another embodiment, the ground tools 3 may be arranged on a tool carrying structure 2 in a mesh pattern to cover a large area evenly.

In this embodiment, the tool carrying structure 2 is formed as a beam on which the ground tools 3, possibly via a suspension bar 14, are mounted onto. However, in another embodiment, the supporting structure could be formed as a lattice construction, frame, one or more traverse bars or other type of carrying structure for carrying the ground tools 3.

Depending on the available space in the rows between the crops, the operator may want to widen or narrow down the cultivating width. This may be achieved by releasing the wedge 8 and the guide 9 of the suspension arrangement 7 from each other such that the ground tool 3 is released from the tool carrying structure 2. The operator may then either leave the ground tool 3 in a tool storeroom or the ground tool 3 could be mounted upside-down on the tool carrying structure 2.

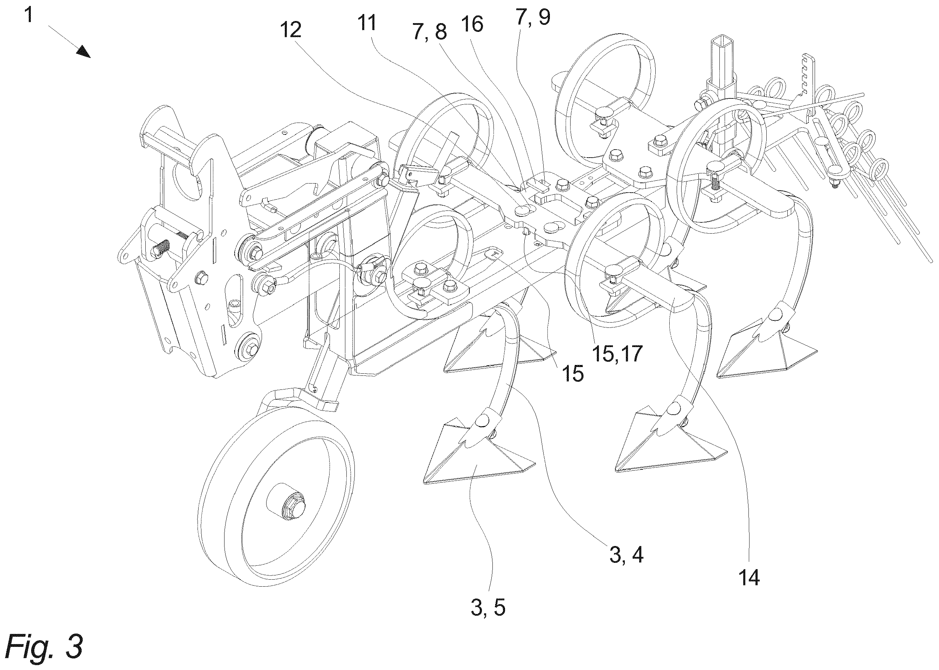

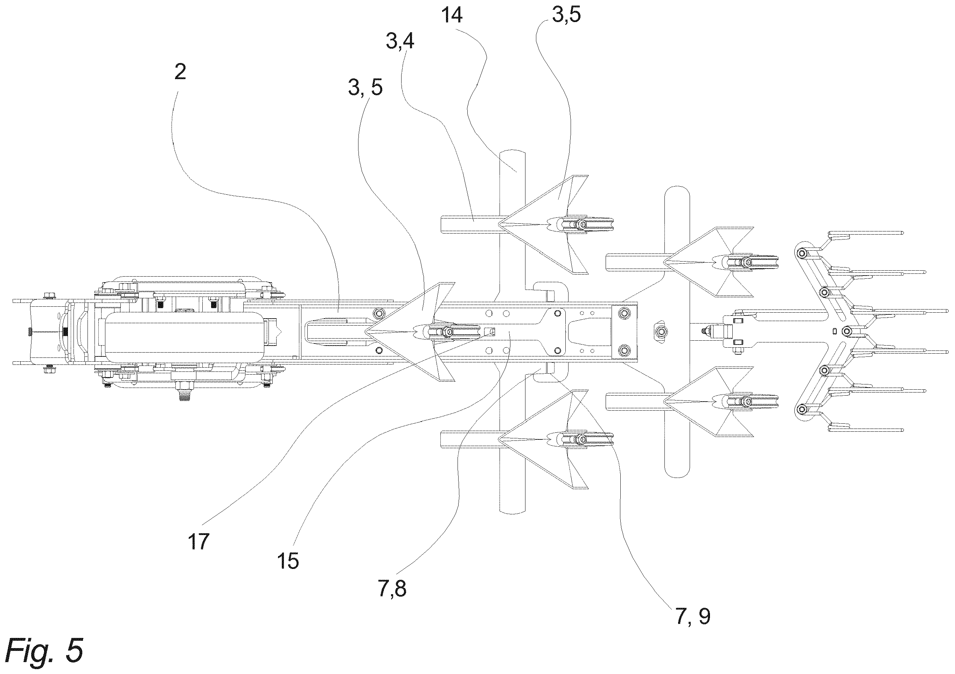

Fig. 3-5 illustrate a cultivator 1 comprising a safety lock 15 and a third retainer as seen in perspective, from the side and from below, respectively.

In this embodiment, the tyne 4 is arranged as a coiled part. However, in another embodiment, the tyne could be a straight stick, curved stick, pole or other type of part which extends between the tool support structure and the ground engaging blade 5.

In this embodiment, the guide 9 is formed bottomless. However, in another embodiment, the bottom of the guide 9 could be formed as a mesh, solid bottom, a grate or other kind of floor. The guide 9 could also be closed on the bottom and upper side should that it forms a channel for receiving the wedge 8.

The safety lock 15 is arranged such that when the wedge 8 is forced into the guide 9, the locking part 17 pops up and retains the horizontal position of the wedge 8 in the guide 9. Thus, if the operator should desire to remove a ground tool 3, he must first release the locking part 17 of the safety lock 15 from blocking the horizontal movement of the suspension 7 such that the wedge 8 may be released from the guide 9.

In this embodiment, the ground engaging blade 5 is mounted on the tyne 4 by means of a bolting arrangement. However, in another embodiment, the blade 5 could be mounted to the tyne 4 by a wedge arrangement, screwed, a pin extending through the blade 5 and the tyne 4, or other connection method or the blade could be formed integrally with the tyne.

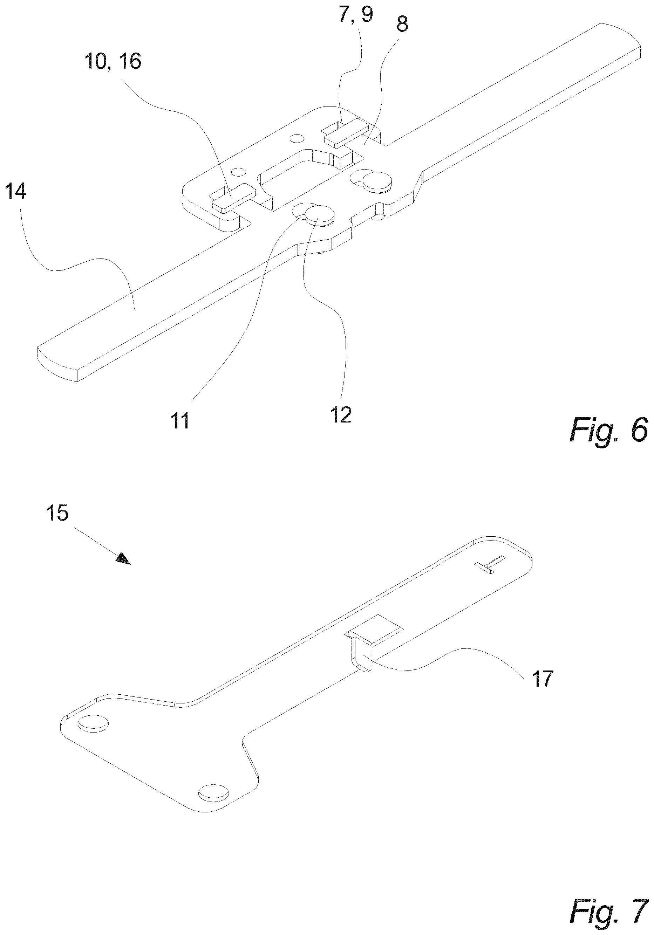

Fig. 6 illustrates the suspension arrangement.

In this embodiment, the wedge surfaces of the guide 9 are arranged substantially vertical. However, in another embodiment, the surfaces could be formed as slanted surfaces, diamond-shaped surfaces or the surfaces could be provided with a spline for receiving a key. The surfaces of the spline and key could also be wedge shaped for increased frictional forces.

Furthermore, in this embodiment, the wedge surfaces are smooth. However, in another embodiment, the surfaces may comprise grip elements, protruding grippers or a rough surface.

In this embodiment, the general shape of the guide 8 corresponds to the general shape of the guide 9. However, in another embodiment, the shapes do not necessarily correspond. For example, the guide could be a prism-like wedge and the guide 9 could be a hole. The wedge 8 could also be a cone-like wedge and the guide 9 could be a hole.

In this embodiment, the wedge 8 is a part of the suspension bar 14. However, in another embodiment, the wedge part 8 may connected to the suspension bar by bolting, welding, screwing or other joining method which rigidly connect the wedge 8 and the suspension bar 14.

Furthermore, in this embodiment, the wedge 8 is rigidly connected to the suspension bar 14. However, in another embodiment, the guide 9 is instead rigidly connected to the suspension bar 14.

In this embodiment, the third retainer part 16 is formed as a traverse retainer piece. However, in another embodiment, the third retainer 16 could comprise a pin secured in lugs, a bolt extending across the guide 9 through flanges on either side of the guide 9 or the third retainer 16 could be formed by closing the guide 9 on the upper side.

Fig. 7 illustrates a safety lock.

In this embodiment, the safety lock 15 is a plate of spring steel comprising a locking part 17 which is bolted to the underside of the tool carrying structure 2. However, in another embodiment, the safety lock could be a pin, a detent, a spring-loaded mechanism, a protruding edge or other type of retainer for locking the horizontal displacement of the suspension arrangement 7.

The invention has been exemplified above with reference to specific examples of cultivators 1, tool carrying structure 2, ground tools 3 and other. However, it should be understood that the invention is not limited to the particular examples described above but may be designed and altered in a multitude of varieties within the scope of the invention as specified in the claims.

### Figure references

- 1.: Cultivator
- 2.: Tool carrying structure
- 3.: Ground tool
- 4.: Tyne
- 5.: Ground engaging blade
- 6.: Ground
- 7.: Suspension arrangement
- 8.: Wedge
- 9.: Guide
- 10.: Vertical retainer
- 11.: First retainer part
- 12.: Second retainer part
- 13.: Engaging wedge surface
- 14.: Suspension bar
- 15.: Safety lock
- 16.: Third retainer part
- 17.: Locking part

## Claims

1. A cultivator (1) comprising
a tool carrying structure (2) arranged to suspend
one or more ground tools (3) each comprising a tyne (4) and a ground engaging blade (5), wherein said tyne (4) is arranged to extend between said ground engaging blade (5) and said tool carrying structure (2) and said ground engaging blade (5) being arranged to engage the ground (6) during normal use of the cultivator (1),
wherein said one or more ground tools (3) are connected to said tool carrying structure (2) by means of a suspension arrangement (7), wherein said suspension arrangement (7) comprises a wedge (8) arranged in a guide (9), wherein one of said wedge (8) and said guide (9) is rigidly connected to said tool carrying structure (2) and the other one of said wedge (8) and said guide (9) is rigidly connected to said one or more ground tools (3), wherein said wedge (8) is arranged so that it is forced into engagement with said guide (9) when said ground tools (3) are pulled through the ground (6) during normal use of said cultivator (1).

2. A cultivator (1) according to claim 1, wherein said suspension arrangement further comprises a vertical retainer (10) arranged to retain the vertical position of said ground tools (3) at least when said wedge (8) is engaging said guide (9).

3. A cultivator (1) according to claim 2, wherein said vertical retainer (10) comprises a first retainer part (11) rigidly connected to said ground tool (3) and a second retainer part (12) rigidly connected to said tool carrying structure (2) and wherein said first retainer part (11) and said second retainer part (12) are arranged to be mutually locking in a vertical direction at least when said wedge (8) is engaging said guide (9).

4. A cultivator (1) according to any of the preceding claims, wherein engaging wedge surfaces (13) of said wedge (8) and said guide (9) are arranged substantially vertical.

5. A cultivator (1) according to any of the preceding claims, wherein the general shape of said wedge (8) substantially corresponds to the general shape of said guide (9).

6. A cultivator (1) according to any of the preceding claims, wherein said guide (9) is formed bottomless.

7. A cultivator (1) according to any of the preceding claims, wherein two or more ground tools (3) are mounted side by side on the same suspension bar (14), wherein said wedge (8) or said guide (9) is provided on said suspension bar (14) to be rigidly connected to said tool carrying structure (2).

8. A method for connecting a ground tool (3) to a tool carrying structure (2) of a cultivator (1), wherein said ground tool (3) comprises a tyne (4) and a ground engaging blade (5), wherein said tyne (4) is arranged to extend between said ground engaging blade (5) and said tool carrying structure (2), said method comprising the steps of
• placing said ground tool (3) so that a wedge (8) rigidly connected to one of said ground tool (3) and said tool carrying structure (2) is arranged in front of a guide (9) rigidly connected to one of said ground tool (3) or said tool carrying structure (2), and
• forcing said wedge (8) and said guide (9) together to wedge said guide and said wedge (8) together to fix said ground tool (3) and said tool carrying structure (2) against mutual displacement at least in a substantially horizontal plane.

9. A method according to claim 8, wherein said method further comprises the step of arranging a first retainer part (11) being rigidly connected to said ground tool (3) in a pre-engaging position in relation to a second retainer part (12) being rigidly connected to said tool carrying structure (2) when placing said wedge (8) and said guide (9) in front of each other and wherein said method comprises the step of engaging said first retainer part (11) and said second retainer part (12) when said wedge (8) and said guide (9) is forced together to fix said ground tool (3) and said tool carrying structure (2) against mutual displacement at least in a substantially vertical plane.

10. A method according to claim 8 or 9, wherein said method is performed by means of a cultivator (1) according to any of claims 1-7.
